# EUROPEAN PATENT SPECIFICATION

(11) **EP 1 574 321 B1**
(45) Date of publication and mention of the grant of the patent: **09.08.2006**
(21) Application number: 04005885.1
(22) Date of filing: 12.03.2004
(51) Int. Cl.: B29C 65/56, B29C 65/64, B29C 53/34

(54) **Process for joining by bending plastic/metal parts without separate joining elements**
Verfahren zum Verbinden durch Biegen von Kunststoff- und Metallteile ohne weitere Verbindungselemente
Procédé pour connecter par pliage des pièces en plastique et en métal sans pièce de connection auxilliaire

(43) Date of publication of application: 14.09.2005
(73) Proprietor: Borealis Technology Oy, 06201 Porvoo (FI)
(72) Inventor: Sageder, Anton Ing., 4030 Linz (AT); Posch, Werner Dipl.-Ing., 4470 Enns (AT)
(74) Representative: VA TECH Patente GmbH & Co

(56) References cited:
- EP-A- 0 340 094
- DE-U- 20 112 720
- FR-A- 1 189 896
- US-A- 3 524 568
- US-A- 4 854 992

## Description

The present invention relates to a novel joining technology for joining metal parts with plastic parts.

### Field of the invention

Hybrid components from plastics-metal-composite are increasingly applied by the industry in applications where a number of functionalities must be realised. These components are incorporating the advantages of each of the basic materials and also the respective processing technologies. Composite structures can already be produced in the moulding process, but can also be produced after the moulding process by subsequent jointing.

US-A-4,854,992 discloses also a process for joining a plastic part with a metal part the metal part comprising a joining part which is to be joined with the joining part of the plastic part where the metal joining part is in the shape of a strip, sheet or plate and is further in a non-linear shape, the plastic joining part comprising at least one flap or leg, the flap or leg being heated above the softening temperature of the plastic and where the heated flap or leg is bent in order to make the plastic joining part enclose the metal joining part.

The present invention relates to a novel joining technology for joining metal parts with plastic parts which obviates the need for separate joining elements like screws, bolts, rivets, etc.

Plastics and metal structures can be joined by a number of diverse joining techniques. Examples are positive substance jointing by e.g. glueing or injection moulding around metal inserts (the latter being a development by Bayer for automobile front ends). Further examples comprise mechanical joining techniques. Mechanical joining techniques are using either separate joining elements (punch rivets, bolts, screws, blind rivets, etc.) or integrated elements (snap-fits, TOX® -joinings, hot rivets, *Kragenfügen,* etc.). Using separate joining elements is expensive because of the costs of the joining elements themselves and because of a more complicated handling.

It is therefore the object of the invention to provide a process for producing plastics/metal hybrid structures, i.e. a process for joining plastics with metal part, which process obviates the need for separate joining elements.

The above object is achieved by a process for joining a plastic part with a metal part, the metal part comprising a joining part which is to be joined with the joining part of a plastic part where the metal joining part is in the shape of a strip, sheet or plate and is further in a non-linear shape, the plastic joining part comprising a recess for receiving the metal joining part, where two facing sides of the recess are laterally defined by two legs, a leg being heated above the softening temperature of the plastic and where the heated leg is bent in order to make the plastic joining part enclose the metal joining part.

The process according to the invention allows quick joining of plastic parts with metal parts with little personnel resources and with only little technical efforts.

The term "plastic" as used herein encompasses all plastic materials, which can be shaped under the influence of heat, especially all thermoplastic polymers, e.g. polyolefins like polyethylene or polypropylene.

### Description of the process according to the invention

In a most basic embodiment the plastics joining part comprises a recess for receiving the metal joining part. On two of its facing sides the recess is laterally defined by two legs. Preferably the recess is in an oblong shape with the two legs being on its long sides. Therefore, in a spatial view the recess may have the shape of e.g. a chute or groove with rounded or angular base. On its short sides the oblong recess preferably is open.

At least one of the legs which are laterally defining two facing sides of the recess is accessible laterally from outside of the recess.

The second leg may be laterally accessible as well, e.g. when the plastic joining part is a U-shaped or Y-shaped frontal edge of a plastic plate.

The second leg may however also be comprised of the bulk of a voluminous component, i.e. may not be a "leg" at all, e.g. a recess in the shape of a U- or V-shaped groove running in the face of a plastic plate parallel to its edge.

The recess may be rounded or angular or both rounded and angular. It may be U-shaped or V-shaped. Different shapes are possible as well, e.g. W-, Y-, J-, hook- or L-shaped.

The metal joining part which is to be joined with the plastic joining part is in the shape of a strip, sheet or plate.

It is an essential aspect of the invention, that the metal joining part is in a non-linear shape. "Non-linear" as used above in the context of the invention means, that the strip-, sheet- or plate-like metal joining part may be bent at an angle or curved or both bent and curved, e.g. J-, hook- or L-shaped. "Non-linear" may further mean, that the metal joining part is branched, e.g. T- or arrow- or Y-shaped.

Preferably the metal joining part is shaped to fit into the recess of the plastic joining part.

For this it is preferred that the metal joining part has an exterior contour which - more or less exactly - fits the interior contour of the recess. At least the at least one leg of the plastic joining part, which is laterally accessible, exceeds the edge of the metal joining part. Therefore, when that one leg of the plastic joining part is heated above its softening temperature, it can be bent around the edge of the metal joining part. This finally results in the plastic joining part enclosing the metal joining part.

The connection between the metal and the plastic part according to the invention is stable and strong and resists all mechanical efforts for tearing it apart. It can only be broken, when the applied mechanical stress ist so large, that the material itself breaks or ruptures. It is a further advantage of the present process, that the joinings resulting from it are not susceptible to warpage. It is therefore possible to produce the metal part and also the plastics part with narrow tolerances. With proper choice of the plastic joining part and the metal joining part it is even possible to achieve gas-tight connections.

Examples for corresponding shapes of metal joining part and plastic joining part are:
e.g. metal joining part with a curved edge: J-shape for the metal joining part - the plastic joining part is U-shaped or J-shaped as well.
e.g. edge of metal joining part is bent in a specific angle: L-shape for the metal joining part - the plastic joining part is U-shaped with an angular base or L-shaped as well.
V-shape for the metal joining part - the plastic joining part is Y-shaped or is V-shaped as well.
e.g. metal joining part is branched: T-shape (upside-down "T") for the metal joining part - the plastic joining part is U-shaped with both legs being laterally accessible.
arrow-shape for the metal joining part - the plastic joining part is V-shaped.
Y-shape (upside-down "Y") of the metal joining part - the plastic joining part is W-shaped.

In all three examples above where the metal joining part is branched, it is preferred that both legs of the plastic joining part are laterally accessible. This ensures that the connection, which results from bending the heated and softened legs over both branches of the metal joining part, has optimum strength.

A preferred application of the inventive process is in the production of interior casings of dishwashers. For the production of these interior casings it is necessary to connect metal sheets with plastic sheets along their edges. According to the prior art these connections have been produced with glueing and/or rivets. Connections obtained with glue are however not resistant to the permanent stress caused by hot/cold and detergent-containing water and connections produced with rivets are not splash proof. Both types of connections are difficult and expensive to produce.

Connections produced with the process according to the invention are resistant to the thermally alternating stress and to the chemical stress caused by hot/cold and detergent-containing water which is typical for dishwashers. Connections produced with the process according to the invention are also splash-proof, therefore the danger of leakage is eliminated.

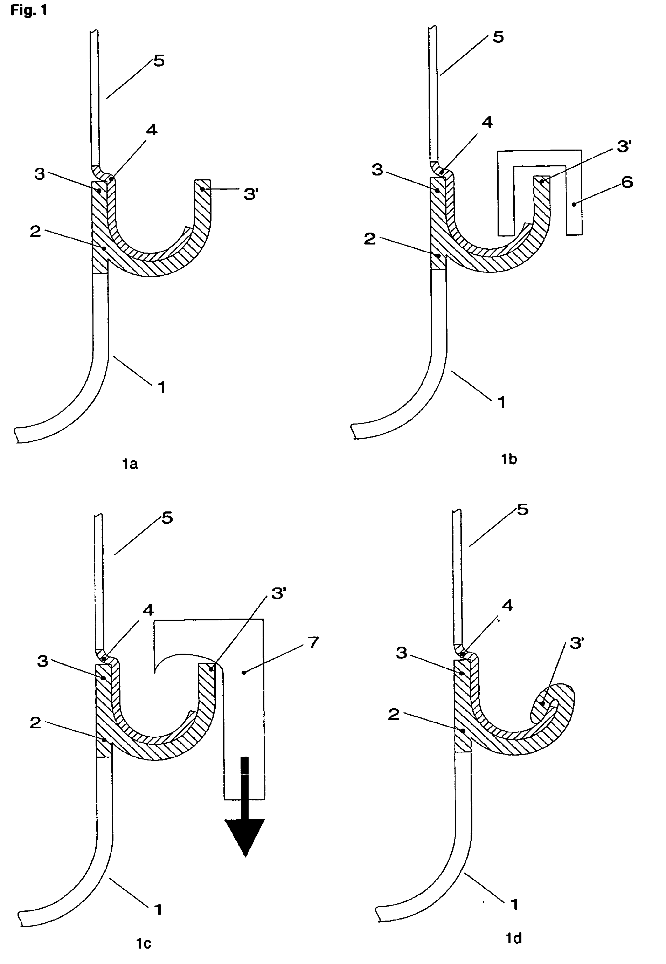

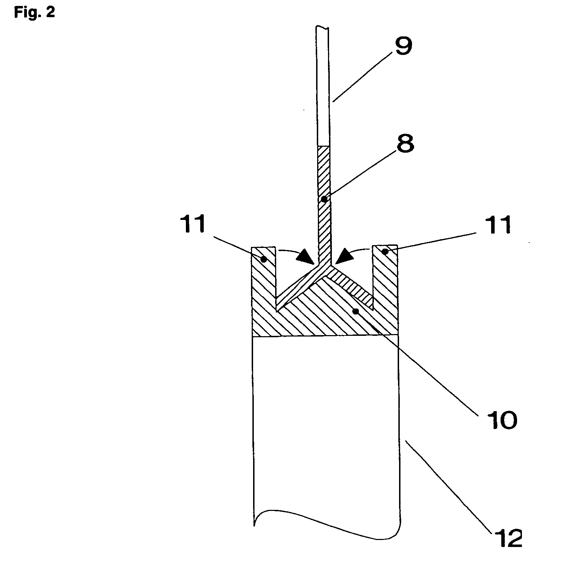

The process according to the invention is illustrated in the drawings of Fig. 1. A further example of a connection which can be produced with the process according to the invention is shown in Fig. 2.
Fig. 1a shows a lateral view of a plastic part 1 which is in the shape of a sheet, and which has a recess formed by a U-shaped plastic joining part **2.** The U-shaped plastic joining part **2** is laterally defined by two legs **3,3'.** The J-shaped metal joining part **4** of a metal part **5,** which is in the shape of a sheet as well, is inserted into the U-shaped plastic joining part **2.**
In Fig. **1b** a heating element **6** is applied to heat leg **3'** above the softening temperature of the plastic material.
In Fig. 1c leg **3',** while still having a temperature above its softening temperature is bent over the edge of metal joining part **4.** Preferably the bending operation is performed with an appropriately shaped tool **7,** which, as in the case of Fig. 1c, allows the bending operation to be performed by a simple downward motion of the tool **7.**
Fig. 1d shows the finished joining after the bending operation has been completed and the material has been allowed to cool and solidify.

In an embodiment which is not shown in the Figures, leg **3'** is chosen longer than in Fig.1, which results in a substantial larger overlap of the finally bent leg **3'** and the J-shaped metal joining part **4.**

Fig. 2 shows an example of a metal joining part **8,** which is branched. In Fig. 2 the metal joining part **8** of the metal part **9** is in the shape of an upside down Y. Accordingly, the plastic joining part **10** is W-shaped with both legs **11** being laterally accessible.

Preferably the plastic parts **1,12** of Fig. 1-2 are obtained by injection molding, which allows the plastic joining parts **2, 10** to be formed during the injection molding process. It is however also possible to obtain suitable plastic joining parts by other processes, e.g. extrusion or mechanical finishing of an injection moulded part.

## Claims

1. Process for joining a plastic part (1,12,) with a metal part (5,9) the metal part comprising a joining part (4,8) which is to be joined with the joining part (2,10) of the plastic part (1,12) where the metal joining part (4,8) is in the shape of a strip, sheet or plate and is further in a non-linear shape, the plastic joining part (2,10) comprising a recess for receiving the metal joining part (4,8), where two facing sides of the recess are laterally defined by two legs (3,3',11), a leg (3,11) being heated above the softening temperature of the plastic and where the heated leg (3,11) is bent in order to make the plastic joining part (2,10) enclose the metal joining part (4,8).

2. Process according to claim 1, **characterised in that** at least one of the legs (3',11) which are defining two facing sides of the recess is accessible laterally from outside of the recess.

3. Process according to one of claims 1 or 2, **characterised in that** the metal joining part is branched (4,8).

## Patentansprüche

1. Verfahren zum Verbinden eines Kunststoffteils (1, 12) mit einem Metallteil (5, 9), wobei das Metallteil ein Verbindungsteil (4, 8) aufweist, das mit dem Verbindungsteil (2, 10) des Kunststoffteils (1, 12) zu verbinden ist, wobei das Metall-Verbindungsteil (4, 8) streifen-, blech- oder plattenförmig ist und weiterhin eine nicht lineare Form hat und das Kunststoff-Verbindungsteil (2, 10) eine Ausnehmung zur Aufnahme des Metall-Verbindungsteils (4, 8) aufweist, wobei zwei sich gegenüberliegende Seiten der Ausnehmung seitlich von zwei Schenkeln (3, 3', 11) definiert werden, wobei ein Schenkel (3, 11) über die Erweichungstemperatur des Kunststoffs erhitzt wird und der erhitzte Schenkel (3, 11) so gebogen wird, dass das Kunststoff-Verbindungsteil (2, 10) das Metall-Verbindungsteil (4, 8) umschließt.

2. Verfahren nach Anspruch 1, **dadurch gekennzeichnet, dass** mindestens einer der Schenkel (3', 11), die zwei sich gegenüberliegende Seiten der Ausnehmung definieren, seitlich von außerhalb der Ausnehmung zugänglich ist.

3. Verfahren nach Anspruch 1 oder 2, **dadurch gekennzeichnet, dass** das Metall-Verbindungsteil (4, 8) verzweigt ist.

## Revendications

1. Procédé pour connecter une pièce en plastique (1, 12) à une pièce en métal (5, 9), la pièce en métal comportant une zone de connexion (4, 8) destinée à être connectée à la zone de connexion (2, 10) de la pièce en plastique (1, 12), dans lequel la zone de connexion en métal (4, 8) se présente sous la forme d'une bande, d'une feuille ou d'une plaque et présente en outre une forme non linéaire, la zone de connexion en plastique (2, 10) comportant un renfoncement destiné à recevoir la zone de connexion en métal (4, 8), dans lequel deux côtés opposés du renfoncement sont définis latéralement par deux branches (3, 3', 11), une des branches (3, 11) étant chauffée au-dessus de la température de ramollissement du plastique et dans lequel la branche chauffée (3, 11) est pliée afin que la zone de connexion en plastique (2, 10) se referme sur la zone de connexion en métal (4, 8).

2. Procédé selon la revendication 1, **caractérisé en ce qu'**au moins une des branches (3', 11) qui définissent les deux côtés opposés du renfoncement est accessible latéralement depuis l'extérieur du renfoncement.

3. Procédé selon l'une des revendications 1 et 2, **caractérisé en ce que** la zone de connexion en métal présente une bifurcation (4, 8).
